# EUROPÄISCHE PATENTANMELDUNG

(11) **EP 2 006 554 A2**
(43) Veröffentlichungstag der Anmeldung: **24.12.2008**
(21) Anmeldenummer: 08010072.0
(22) Anmeldetag: 02.06.2008
(51) Int. Cl.: F16C 3/02

(54) **Flansch für Transmissionswelle**

(30) Priorität: 19.06.2007 DE 102007028021
(71) Anmelder: Liebherr-Aerospace Lindenberg GmbH, 88161 Lindenberg/Allgäu (DE)
(72) Erfinder: Ehrlinspiel, Herbert, Dipl-Ing. (FH), 88048 Friedrichshafen (DE)
(74) Vertreter: Laufhütte, Dieter

(57) **Zusammenfassung**

Die Erfindung betrifft einen Flansch (10) für eine Transmissionswelle aus Faserverbundwerkstoffen, insbesondere zum Antrieb der Flügelklappen eines Flugzeugs, mit einer Hülse (12), wobei auf dem Umfang der Hülse Stege (22) ausgebildet sind, die einen einen Hinterschnitt bildenden Absatz (24) aufweisen. Die Erfindung betrifft auch eine Transmissionswelle unter Verwendung eines vorgenannten Flansches.

## Beschreibung

Die Erfindung betrifft einen Flansch für eine Transmissionswelle aus Faserverbundwerkstoffen, insbesondere zum Antrieb der Flügelklappen eines Flugzeugs nach dem Oberbegriff des Anspruchs 1.

In der DE 10 2007 018 082 der gleichen Anmelderin ist eine aus Faserverbundwerkstoffen bestehende Transmissionswelle zum Antrieb der Flügelklappen eines Flugzeugs beschrieben. Die hier dargestellten Antriebswellen eignen sich in gleicher Weise als Antriebswellen für die Klappen der Flügelvorderkante (Slat Actuation System) sowie der Flügelhinterkante (Flap Actuation System) und vermag die früher üblichen Transmissionswellen aus Stahl zu ersetzen. Diese Transmissionswellen weisen in der Regel Metallflansche auf, mit denen sie verbunden werden müssen. Die Verbindung aus Transmissionswelle und Metallflansch muss einer ganzen Reihe von Auslegungskriterien entsprechen, die im Flugzeugbau eingesetzt werden. Es handelt sich hier insbesondere um die Berücksichtigung der folgenden dreizehn Kriterien:
1. Compliance (Drehsteifigkeit)
2. Torsional Resistance (Torsion, Drehsteifigkeit)
3. Torsional Buckling (Torsionsbeulen)
4. Euler Buckling (Euler Beulen)
5. Combined Load Case (kombinierter Lastfall - Torsion und Zug/Druck)
6. Hanging Man
7. Fatige Resistance (Lebensdauer)
8. Whirling (Ausknicken durch Drehzahlbelastung)
9. Eigenfrequency (Eigenfrequenz)
10. Reliability Test (Betriebssicherheit)
11. Weight (Gewicht)
12. Dual Load Path (zwei unabhängige Lastpfade)
13. Impact Test (Schlagbeständigkeit)

Gemäß dem Stand der Technik wurden die Metallflansche in die Transmissionswellen eingeklebt. Um einen Lastpfad zu realisieren, wurden sie zusätzlich mit einer Nietverbindung miteinander verbunden. Derartige Nietverbindungen sind im Herstellprozess vergleichsweise aufwendig.

Aufgabe der Erfindung ist es, einen Flansch für eine gattungsgemäße Transmissionswelle an die Hand zu geben, der eine einfache und sichere Verbindung zwischen Flansch und Transmissionswelle ermöglicht.

Erfindungsgemäß wird die Aufgabe durch die Kombination der Merkmale des Anspruchs 1 gelöst. Demnach ist ein Flansch für eine Transmissionswelle aus Faserverbundwerkstoffen geschaffen, der sich insbesondere zum Antrieb der Flügelklappen eines Flugzeugs eignet, wobei dieser eine Hülse aufweist, auf deren Umfang Stege ausgebildet sind. Die jeweiligen Stege weisen einen Absatz auf, der einen Hinterschnitt bildet.

Die Transmissionswelle aus Faserverbundwerkstoffen kann bei der Verbindung mit einem derartigen Flansch fingerartig zwischen die Stege greifen. Hierdurch wird eine Flanschverbindung geschaffen, die die Kräfte in rotatorischer Richtung aufgrund des so entstehenden Formschlusses überträgt. Gleichzeitig übergreift die aus dem Faserverbundwerkstoff bestehende Transmissionswelle auch die die Hinterschnitte bildenden Absätze. Hierdurch wird eine Flanschverbindung auch in axialer Richtung geschaffen. Also auch in axialer Richtung besteht eine innige formschlüssige Verbindung zwischen der Transmissionswelle und dem Flansch. Ein wesentliches Element der Erfindung besteht nun darin, dass die rotatorischen Kräfte von den axialen Kräften durch die entsprechende Gestaltung des Flansches entkoppelt sind.

Je nach Dominanz der Belastung in der Belastungskombination können die jeweiligen Stege unterschiedlich dimensioniert werden. Dominiert beispielsweise die Axialbelastung, wird der den Hinterschnitt bildende Absatz entsprechend massiver ausgeführt. Dominiert dagegen die Rotationsbelastung, wird der Steg als ganzes massiver ausgeführt.

Je nach Größe der Belastung kann auch die Anzahl der entsprechenden Stege, die am Umfang der Hülse angeordnet sind, variieren.

Bevorzugte Ausgestaltungen der Erfindung ergeben sich aus den sich an den Hauptanspruch anschließenden Unteransprüchen.

Gemäß einer bevorzugten Ausgestaltung der Erfindung können die Stege gleich verteilt auf der äußeren Oberfläche der Hülse vorgesehen sei. Alternativ können die Stege auch gleich verteilt auf der inneren Oberfläche der Hülse vorgesehen sein. Auch eine Kombination von innen und außen vorgesehenen Stegen ist vorteilhaft möglich.

Gemäß einer Ausgestaltung der Erfindung können die auf der Oberfläche der Hülse angeordneten Stege unmittelbar einstückig in den Flansch übergehen. Hierdurch ist eine besonders stabile Verbindung zwischen dem Flanschkragen und der Flanschhülse geschaffen.

Im Flansch sind vorteilhaft mehrere Anschlussbohrungen ausgebildet. Dabei können die Bohrungen auf Umfang gleich verteilt sein, wobei die Bereich, in denen die Bohrungen vorgesehen sind, in Form angeformter Ohren über den sonstigen flanschförmigen Rand hinausragen. Diese Ausgestaltung ist besonders gewichtssparend.

Der Flansch besteht vorteilhaft aus einem beliebigen hochfestem Material. Dieses Material kann ein Metall und besonders vorteilhaft ein Leichtmetall, wie beispielsweise Aluminium, sein.

Die Erfindung betrifft weiterhin eine Transmissionswelle mit einem entsprechend ausgestaltetem Flansch, wobei der Flansch jeweils derart in die zylinderförmigen Endbereiche der Transmissionswelle eingeschoben sind, dass diese die Stege auf der Hülse des Flansches um- und übergreift.

Zusätzlich ist die Transmissionswelle mit dem Flansch verklebt, insbesondere so, dass die formschlüssige Verbindung wie auch die stoffschlüssige Klebeverbindung einen eigenständigen, gleichwertigen und zum Betrieb der Transmissionswelle ausreichenden Lastpfad darstellen. Vorteilhaft besteht die Transmissionswelle aus einer oder mehreren Kohlefaser-Lagen und einer oder mehreren Glasfaser-Lagen. Hierdurch wird ein besonders fester Faserverbundwerkstoff geschaffen.

Die Erfindung betrifft weiterhin ein Flugzeug mit einer Transmissionswelle zum Antrieb der Flügelklappen, insbesondere der Klappen der Flügel-Vorderkante und/oder der Flügel-Hinterkante, unter Einsatz einer Transmissionswelle mit mindestens einem Flansch entsprechend, der vorbezeichneten Merkmale.

Weitere Merkmale, Einzelheiten und Vorteile der Erfindung ergeben sich aus den in der Zeichnung dargestellten Ausführungsbeispielen. Es zeigen:
- Figur 1:: eine perspektivische Ansicht einer ersten Ausführungsvariante des erfindungsgemäßen Flansches und

- Figur 2:: eine perspektivische Ansicht einer zweiten Ausführungsform eines erfindungsgemäßen Flansches.

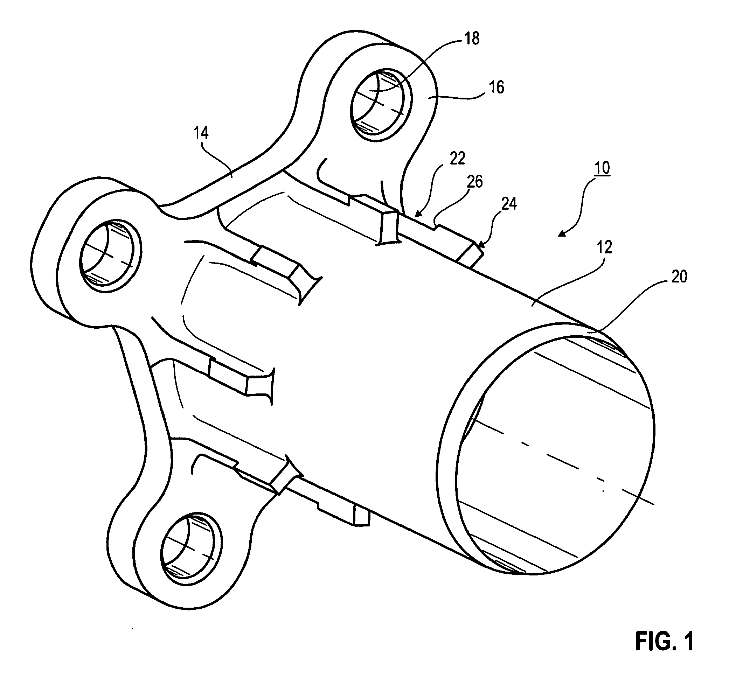

Figur 1 zeigt eine erste Ausgestaltung des erfindungsgemäßen Flansches 10, der im wesentlichen aus einer Hülse 12 und einem angeformten Randbereich 14 besteht. Der Randbereich 14 des Flansches weist vier ohrenförmige Vorsprünge 16 auf, die gleichmäßig über den Umfang verteilt sind. Die ohrenförmigen Vorsprünge 16 weisen Bohrungen 18 auf. Aufgrund dieser Gestaltung des Randbereichs des Flansches wird gegenüber einer kreisrunden Ausführung des Randes Material eingespart, das zur Gewichtsreduktion des Bauteils führt. Aufgrund entsprechender Dimensionierung der ohrförmigen Vorsprünge 16 ist dennoch eine ausreichende Stabilität gewährleistet.

Die Hülse 12 ist im vorderen Bereich mit einer Anschrägung 20 versehen, die ein einfaches Aufschieben der hohlen, hier nicht näher dargestellten, Transmissionswelle im Montagefall ermöglicht.

Von besonderer Bedeutung sind die gemäß der Ausführungsform nach Figur 1 außen auf der Oberfläche der Hülse 12 einstückig angeformten Stege 22. Diese weisen radial von der Oberfläche der Hülse 12 nach außen. Die Stege weisen jeweils auf der vom Rand 14 des Flansches weg weisenden Seite einen Absatz 24 auf, der einen scharfkantigen Hinterschnitt 26 bildet. Anders als in der Figur 1 dargestellt, kann der Hinterschnitt 26 nicht nur an der Oberseite des Steges 22 ausgebildet sein. Vielmehr kann er auch seitlich am Steg 22 ausgebildet sein. In dem in Figur 1 dargestellten Ausführungsbeispiel schließen die jeweiligen Stege 22 jeweils einstückig an dem Rand 14 des Flansches 10 an. Hierdurch ist eine besonders feste und formstabile Gestaltung der Stege 22 geschaffen.

Grundsätzlich kann die Höhe der Stege 22 bzw. der Absätze 26 je nach der zu erwartenden Belastungssituation dimensioniert werden. Bei entsprechend hohen Radialkräften sind vergleichsweise größere Steghöhen vorzusehen. Bei entsprechend hohen Axialkräften muss der Absatz entsprechend groß dimensioniert werden. Darüber hinaus wird je nach Größe der auftretenden Kräfte die Anzahl der Stege variieren. Je höher die Kräfte sind, die vom Flansch 10 übertragen werden müssen, desto mehr Stege sind auf dem Umfang der Hülse 12 vorzusehen. Im hier dargestellten Ausführungsbeispiel sind acht Stege auf dem Umfang gleich verteilt ausgeführt.

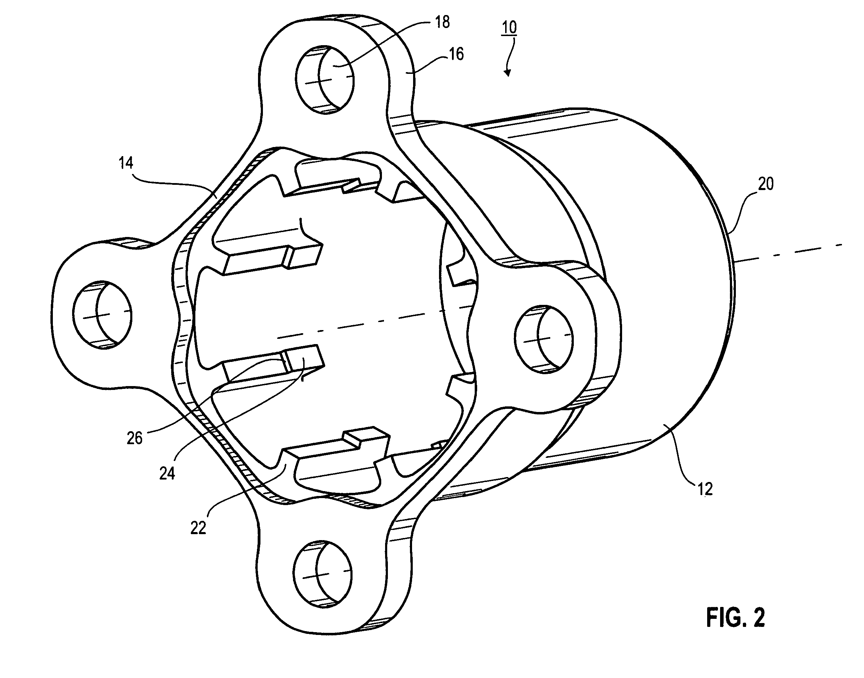

Eine alternative Ausgestaltung der Erfindung ergibt sich aus der Figur 2. Hier ist der Flansch 10 in wesentlichen Teilen ähnlich aufgebaut, wie anhand der Figur 1 erläutert. Identische Teile sind hier mit identischen Bezugszeichen versehen.

Allerdings sind die Stege 22 in dem in Figur 2 dargestellten Ausführungsbeispiel auf der inneren Umfangsfläche des Flansches 10 vorgesehen. Hier sind im Ausführungsbeispiel wiederum acht Stege über den Umfang gleich verteilt angeordnet. Auch die Stege gemäß Figur 2 weisen einen Absatz 24 auf, der jeweils einen Hinterschnitt 26 bildet. In hier nicht näher dargestellter Art und Weise ragt die Transmissionswelle in das Innere der Hülse 12 und greift zwischen und über die Stege 22, so dass sich auch hier ein fester Verbund ergibt, mittels dem radiale und axiale Kräfte übertragen werden können.

## Patentansprüche

1. Flansch für eine Transmissionswelle aus Faserverbundwerkstoffen, insbesondere zum Antrieb der Flügelklappen eines Flugzeugs, mit einer Hülse,
**dadurch gekennzeichnet,**
**dass** auf dem Umfang der Hülse Stege ausgebildet sind, die einen einen Hinterschnitt bildenden Absatz aufweisen.

2. Flansch nach Anspruch 1, **dadurch gekennzeichnet, dass** die Stege gleichverteilt auf der äußeren Oberfläche der Hülse vorgesehen sind.

3. Flansch nach Anspruch 1 oder 2, **dadurch gekennzeichnet, dass** die Stege gleichverteilt auf der inneren Oberfläche der Hülse vorgesehen sind.

4. Flansch nach einem der Ansprüche 1 bis 3, **dadurch gekennzeichnet, dass** die auf der Oberfläche der Hülse angeordneten Stege unmittelbar einstückig in den Flansch übergehen.

5. Flansch nach einem der Ansprüche 1 bis 4, **dadurch gekennzeichnet, dass** im Flansch mehrere Anschlußbohrungen ausgebildet sind.

6. Flansch nach Anspruch 5, **dadurch gekennzeichnet, dass** die Bohrungen auf dem Umfang gleichverteilt angeordnet sind, wobei die Bereiche in denen die Bohrungen vorgesehen sind, in Form angeformter Ohren über den sonstigen flanschförmigen Rand hinausragen.

7. Flansch nach einem der vorangegangenen Ansprüche, **dadurch gekennzeichnet, dass** er aus einem hochfesten Material besteht

8. Flansch nach Anspruch 7, **dadurch gekennzeichnet, dass** er aus Metall besteht.

9. Flansch nach einem der vorangegangenen Ansprüche, **dadurch gekennzeichnet, dass** er aus Leichtmetall, wie z.B. Aluminium, besteht

10. Transmissionswelle mit einem Flansch nach einem der vorangegangenen Ansprüche, **dadurch gekennzeichnet, dass** die Flansche derart in die zylinderförmigen Endbereiche der Transmissionswelle eingeschoben sind, dass diese die Stege auf der Hülse des Flansches um- und übergreift.

11. Transmissionswelle nach Anspruch 10, **dadurch gekennzeichnet, dass** sie jeweils mit dem Flansch verklebt ist, insbesondere so, dass die formschlüssige Verbindung wie auch die stoffschlüssige Klebeverbindung einen eigenständigen, gleichwertigen und zum Betrieb der Transmissionswelle ausreichenden Lastpfad darstellen.

12. Transmissionswelle nach Anspruch 10 oder 11, **dadurch gekennzeichnet, dass** sie eine oder mehrere Kohlefaser-Lagen und eine oder mehrere Glasfaser-Lagen aufweist.

13. Flugzeug mit einer Transmissionswelle nach einem der vorangegangenen Ansprüche, insbesondere zum Antrieb der Flügelklappen, insbesondere der Klappen der Flügel-Vorderkante und/oder der Flügel-Hinterkante.
